# EUROPEAN PATENT APPLICATION

(11) **EP 0 662 459 A1**
(43) Date of publication of application: **12.07.1995**
(21) Application number: 95300108.8
(22) Date of filing: 09.01.1995
(51) Int. Cl.: C03C 17/42, C03C 17/34, C03C 17/38, G02B 5/08, G02B 1/10

(54) **Coatings on glass**

(30) Priority: 10.01.1994 GB 9400321
(71) Applicant: PILKINGTON GLASS LIMITED, St. Helens, Merseyside WA10 3TT (GB)
(72) Inventor: Parkes, David Peter, Wigan, WN6 0SP (GB); Jenkinson, Timothy, Wigan, Greater Manchester WN6 9HU (GB)
(74) Representative: Jenkins, Peter David

(57) **Abstract**

A mirror comprising a glass substrate (1), a low transmissivity reflecting (2) coating on the substrate and an opacifying layer (7) which is disposed on the glass substrate for a front surface mirror or on the reflecting coating for a back surface mirror, the opacifying layer comprising an alkyd resin based paint having an organo silane primer incorporated therein. The present invention also provides a method of producing mirrors comprising depositing onto a hot ribbon of glass during the production process a low transmissivity reflecting coating and applying an opacifying layer to the glass substrate or the reflecting coating of the mirrors so formed, the opacifying layer comprising an alkyd resin based paint having an organosilane primer incorporated therein. The present invention still further provides a paint composition for use as a mirror backing paint, the paint composition having a resin component consisting of an alkyd resin as the base resin of the composition, optionally in admixture with a melamine resin, at least one opacifier and an organo silane adhesion promotor in an amount of around 5% by weight based on the weight of the paint and the paint being substantially lead-free.

## Description

The invention relates to a method of producing mirrors, and to coated glass substrates incorporating highly reflecting "mirror" coatings. The invention particularly relates to the application of an opacifying layer to a back surface of a mirror. The invention also relates to a paint composition for use as an opacifying layer.

The light reflecting properties of mirrors are generally provided by a layer of highly reflecting metal, especially silver, aluminium or chromium, applied to a glass or plastics substrate; copper layers are sometimes used as an alternative, but are generally less acceptable because of the strong red tint of the reflected light.

Silver coatings are generally applied to preformed glass plates, in the cold, by wet chemical methods in which a solution of silver salt is applied to the glass surface and reacted with a reducing agent which reduces silver ions present to silver metal which deposits on the glass surface. The silver used is not very durable in use and in practice requires protection by other layers, and these methods are generally unsuitable for application to glass on the production line i.e. the float line on which it is formed so that a separate "silvering" line is required to produce the silvered glass.

Aluminium coatings are difficult to apply by chemical methods because of the strongly reducing nature of aluminium metal, and aluminium mirrors are generally produced by deposition methods carried out at low pressure e.g. by sputtering. Such low pressure methods are essentially batch processes and, like the wet chemical methods used for deposition of silver mirrors, are generally unsuitable for on-line application on the production line on which the glass is made.

GB 2248853A discloses a method of coating glass with aluminium to form a mirror. A solution of an alane amine adduct of aluminium is formed and the liquid is deposited onto heated glass. The adduct decomposes to form an aluminium coating. Although it is stated that it is envisaged that the invention may be used in conjunction with float glass production, there is no exemplification of such a use. It is believed that substantial technical problems could be encountered in simply introducing the disclosed aluminium compounds into a float glass line.

Known mirrors using a highly reflective metal layer in a back surface (Face 2) mirror construction typically employ two paint coatings over the metal layer. For a typical silvered mirror, the silver coating is covered with a copper metal coating which is in turn covered with two paint coatings. The paint coatings, which are typically oil based comprised of short oil alkyds, are applied to the metal layers in order chemically to protect the metal layer from corrosion and, to a lesser extent, to protect the metal layers from physical damage. The reflecting metal layers employed in the known mirrors are opaque to visible light and thus the paint coatings employed in the prior art are selected so as to provide chemical or corrosion protection to the metal layers and are not formulated so as to provide any opacification in the mirror. Two paint layers are generally required in order to provide the necessary chemical protection of the metal layer or layers.

Silicon layers have also been used to produce reflecting layers (which, like silver and aluminium layers, are substantially neutral in reflection colour) on architectural glazing for aesthetic and solar control purposes. GB 1507465, 1507996 and 1573154 relate to a continuous chemical vapour deposition method for producing float glass having such a silicon layer, and US 4661381 describes a development of that method. However, such silicon layers do not provide the high reflections commonly required in mirrors. Thus REFLECTAFLOAT (trade mark) glass, commercially available from Pilkington Glass Limited of St. Helens, England, has a reflection of about 50%, and MIRROPANE EP (trade mark) commercially available from Libbey-Owens-Ford Co. has a reflection of about 60%.

None of the above technology is currently suitable for the application of highly reflecting coatings to glass during the glass production process to provide a coated glass substrate with a light reflection of over 70%, and preferably over 80%.

On a completely different scale, it has been proposed in GB 1262163, to produce very highly reflecting (greater than 90%) "cold light" mirrors comprising silicon layers for use, for example in cinema projectors, for separating heat radiation from visible light. Such cold light mirrors are produced by vacuum deposition on thin bases, typically glass substrates 3mm thick or less, and are used without any backing paint to minimise build up of heat in the glass. GB 1262163 refers, in discussing the prior art, to a known cold light mirror comprising a "purest silicon layer" covered by four to six alternate layers of silicon oxide and tantalum oxide or titanium oxide but concludes that, for a satisfactory product, substantially more layers would be required. It therefore proposes to achieve the very high reflection (greater than 90%) required in a different way using several silicon layers as the individual layers of high refractive index of a multi-layer interference system.

Much more recently, it has been proposed by J. Stone and L. W. Stulz (Applied Optics, February 1990, Volume 29, No. 4) to use quarter wavelength stacks of silicon and silica layers for mirrors in the spectral region between 1.0 and 1.6 microns (i.e. within the infra red). However, the authors observe that silicon cannot be used at wavelengths below about 1 micron (and thus not in the visible region of the spectrum) due to its high absorption at such wavelengths. Stone and Stulz refer to the deposition of Si/SiO₂ by low pressure methods such as reactive sputtering and electron beam evaporation.

Although GB 1262163 and the Stone and Stulz paper are discussed herein, the technology, in particular the production process described therein, is not suitable for the production of on line glass mirrors which essentially requires processes suitable for use at atmospheric pressure. Accordingly, these references would not be considered by the person skilled in the art as being in any way relevant to the production of on-line mirrors to compete with the conventional "off-line" mirrors discussed above.

In addition, none of the prior art glass constructions using silicon to produce a reflecting layer discloses or relates to the production of mirrors for example, for domestic or architectural purposes, which require opacification of the back surface of the mirror.

According to the present invention there is provided a mirror comprising a glass substrate, a low transmissivity reflecting coating on the substrate and an opacifying layer which is disposed on the glass substrate for a front surface mirror or on the reflecting coating for a back surface mirror, the opacifying layer comprising an alkyd resin based paint having an organo silane primer incorporated therein.

The present invention further provides a method of producing mirrors comprising depositing onto a hot ribbon of glass during the production process a low transmissivity reflecting coating and applying an opacifying layer to the glass substrate or the reflecting coating of the mirrors so formed, the opacifying layer comprising an alkyd resin based paint having an organosilane primer incorporated therein.

The present invention still further provides a paint composition for use as a mirror backing paint, the paint composition having a resin component consisting of an alkyd resin as the base resin of the composition, optionally in admixture with a melamine resin, at least one opacifier and an organo silane adhesion promotor in an amount of at least around 1% by weight based on the weight of the paint and the paint being substantially lead-free.

The present invention further provides a mirror comprising a glass substrate, a low transmissivity reflecting coating on the substrate and an opacifying layer which is disposed on the glass substrate for a front surface mirror or on the reflecting coating for a back surface mirror, the opacifying layer comprising a lead-free alkyd resin based paint.

The present invention yet further provides a method of producing mirrors comprising depositing onto a hot ribbon of glass during the production process a low transmissivity reflecting coating whereby the mirrors have a visible light reflection of at least 70% and applying an opacifying paint layer to the glass substrate or the reflecting coating of the mirrors so formed by a coating process selected from curtain coating, roller coating or spray coating.

The present invention further provides a method of opacifying a low transmissivity mirror comprising a glass substrate and a low transmissivity reflecting coating on the substrate, the method comprising applying to the glass substrate for a front surface mirror or to the reflecting coating for a back surface mirror a paint composition having a resin component consisting of an alkyd resin as the base resin of the composition, optionally in admixture with a melamine resin, at least one opacifier and an organo silane adhesion promotor in an amount of at least 1% by weight based on the weight of the paint and the paint being substantially lead-free.

The present invention further provides the use of the paint composition of the invention as an opacifying layer on a mirror comprising a glass substrate carrying a low tranmissivity reflecting coating.

The low transmissivity reflecting coating may have a transmissivity of from 1 to 15%, more preferably from 3 to 10% in visible light (measured when carried on a clear glass substrate).

The opacifying layer is preferably a substantially opaque layer which is disposed on the side of the mirror which is to be remote from the source of light to be reflected in use. Thus for back surface (Face 2) mirrors, the opacifying layer would usually be applied over the outer layer of the reflecting coating and for front surface (Face 1) mirrors the opacifying layer would usually be applied over the back surface of the glass substrate.

The coated ribbon is cut on-line to form individual mirrors, and will usually be further cut off-line to provide separate mirrors of the required size. The opacifying layer may be applied off-line, preferably by a curtain coating process or a roller coating process and preferably before further cutting of the mirrors off-line. Alternatively, the opacifying layer may be applied on-line by a spray or roller process. In each of these embodiments the opacifying layer is applied as a paint which may be solvent-based or water-based.

Preferred paint formulations are alkyd-based paints which have a rheology so as to be readily coatable. The opacifying layer is up to about 50 microns thick, more preferably up to about 25 microns thick, most preferably around 18 microns thick, all thicknesses being dry film thicknesses. A typical as-cured or dry paint thickness in accordance with the invention is 25 ± 5 microns for curtain coated paints and 15 ± 5 microns for roller or spray applied paints. The paint formulations employed in the present invention are different from paint formulations known as backing paints for silvered mirrors. The paint formulations used in the present invention do not contain corrosion protection agents, such as lead, and they may therefore be lead-free but they do contain opacifiers such as carbon black in order sufficiently to opacify the resultant mirror. The paints may also incorporate wetting additives.

Preferably, a primer layer is applied to the underlying surface before paint is applied, although alternatively the paint may have a primer incorporated into the composition thereof. A suitable primer is an organo silane, and a particularly suitable primer for use with alkyd based paints is an organosilane having amino end groups, such as an aminopropyltrimethoxysilane. That primer is stable in water and wets the underlying surface to be painted. It may be applied as a 1-2% aqueous solution in deionised water. Alternatively, when the organo silane primer is incorporated into the paint, the primer is preferably present in an amount of from 1 to 6% by weight based on the weight of the paint at a typical solids content of around 62%, most preferably around 1% by weight when the paint is applied to the reflecting coating (for a back surface mirror) or around 5% by weight when the paint is applied to the glass surface (for a front surface mirror).

Preferably, the reflecting coating comprises a reflecting layer and at least two reflection enhancing layers whereby the mirrors have a visible light reflection of at least 70%.

In this specification the terms "reflecting layer" and "reflection enhancing layer" are intended to indicate the relative interrelationship between the layer positions. Thus, the reflecting layer is, in use, furthest from the source of light to be reflected and the reflection enhancing layers are between the light source and the reflecting layer. The term "reflecting layer" is not necessarily intended to imply that that layer is the primary contributor to the overall reflection of the reflecting coating as compared to the other layers of the coating. In certain embodiments the largest contributor to the overall reflection may be a reflection enhancing layer.

Thus for front surface mirrors the inner of the said three layers is the reflecting layer and intermediate and outer layers act as reflection enhancing layers, and for back surface mirrors the outer of the said three layers is the reflecting layer and the intermediate and inner layers act as reflection enhancing layers. The inner layer is identified as the layer of the coating nearest to the glass and the outer layer as the layer furthest from the glass of the said three layers.

It is known in the art that refractive index varies with wavelength. In this specification and claims, references to "refractive index" are intended to mean (in conventional manner) the refractive index for light of wavelength 550 nm and, in assessing and quoting refractive index values, any imaginary part of the refractive index is disregarded.

The expression "visible light reflection", as used in the present specification and claims, refers to the percentage of light reflected under Illuminant D65 source 1931 Observer Conditions.

The reflecting layer may have a high refractive index and the reflection enhancing layers may have high and low refractive indices so that the resultant stack of layers has successive high, low and high refractive indices.

The desired high reflection may be achieved using layer thicknesses such that reflections from the interfaces between the said coating layers reinforce reflections from the outer surface of the said outer layer (for front surface mirrors) or the inner surface of the said inner layer (for back surface mirrors). The materials of the inner and outer layers are preferably selected so that the aggregate refractive index of the materials of the two layers is at least 5.5 when the reflecting layer is of high refractive index.

Silicon is preferably used for at least one of the inner and outer layers because (a) it may have a particularly high refractive index and (b) it is readily deposited on-line on hot glass, for example, by the processes described in GB 1507465, GB 1507996 and GB 1573154.

The refractive index of silicon may be as great as about 5, (see P.J. Martin, R.P. Netherfield, W.G. Sainty and D.R. McKenzie in Thin Solid Films 100 (1983) at pages 141-147) although lower values are often encountered.

It is believed that, in practice, the value varies depending on the precise physical form of the silicon and the presence of any impurities, for example oxygen, nitrogen or carbon. For the purpose of the present invention, the presence of such impurities may be tolerated (and indeed, it is difficult in practice to produce on-line silicon coatings without significant oxygen and/or carbon incorporation) provided the refractive index is not reduced below about 2.8. Thus the term "silicon" as used herein with reference to layers of relatively high refractive index refers to material which is predominantly silicon, but may contain minor proportions of impurities, provided its refractive index is at least 2.8.

While its high refractive index and ease of deposition favour the use of silicon, the high absorption of silicon leads to a reduction in the reflection. When only one of the inner and outer layers is of silicon, the other (preferably the inner layer for back surface mirrors and the outer layer for front surface mirrors) must be of a material having a higher refractive index than the intermediate layer (and of at least 1.6) and is preferably of low absorption in the visible region of the spectrum. Preferred materials, other than silicon, for a layer of relatively high refractive index are materials having a refractive index in the range 1.9 to 3.0, usually 2.0 to 2.7 and include tantalum oxide, titanium oxide, tin oxide and silicon oxides (including silicon oxides containing additional elements, for example nitrogen and carbon). The amount of such additional elements in silicon oxide can be varied so as to vary the refractive index because the refractive index is composition-dependent. The deposited silicon oxides are generally not stoichiometric. In general, the higher the refractive index of a material, and the lower its visible light absorption, the more effective it will be as a reflecting layer or reflection enhancing layer of high refractive index; expressed in another way, a reduction in the refractive index of the material may be compensated for by a reduction in its visible light absorption.

The intermediate layer i.e. the reflection enhancing layer adjacent the reflecting layer, which is of relatively low refractive index, has a refractive index lower (and in any event below 3) than that of the inner and outer layers of relatively high refractive index.

In general, the lower the refractive index (for a layer of given light absorption) of the intermediate layer, the higher the reflection that can be achieved. The layer of relatively low refractive index will usually have a refractive index below about 2, and it is generally preferred to use a layer of refractive index less than 1.8.

It is also preferred to use as the intermediate layer a material which is substantially non-absorbing in the visible region of the spectrum in order to increase the total light reflection. A suitable and convenient layer material is silicon oxide, which may however contain additional elements such as carbon or nitrogen, and the term "silicon oxide" is used herein to encompass silicon oxides additionally containing other elements, for example, silicon oxides containing carbon and/or nitrogen and, when used with reference to the intermediate layer, having a refractive index of less than 2. Surprisingly, it is found in practice, that adjacent layers of silicon and silicon oxide can be applied pyrolytically to the glass without interdiffusion or interactions which would cause unacceptable reduction in the refractive index of the silicon or increase in the refractive index of the silicon oxide; the adjacent layers of silicon and silicon oxide appear to remain, at least in terms of their optical performance, separate and distinct. However, it may be that at the interfaces of the layers there exist physically narrow interaction zones with steep refractive index gradients that do not alter the optical characteristics of the mirror. Another material which may be used for the intermediate layer is aluminium oxide.

Some of the coating materials, especially silicon, which may be used to form the outer layer of high refractive index have limited scratch resistance and, if a more durable product is required, an additional protective layer of a harder material, for example of tin oxide, may be deposited over said outer layer. It will be appreciated that, if such a protective layer is used on front surface mirrors, it should be of a material (and tin oxide and titanium oxide are examples) that has a low light absorption in the visible region of the spectrum in order to maintain the light reflection of the product, and should be of an optical thickness subtantially different from a quarter wavelength to avoid suppressing the reflection from the outer layer; if used, such a protective layer will typically have a thickness in the region of 10 nm to 30 nm. An outermost layer, of silicon, titania or the above-described protective layer, provides chemical durability to the mirrors. This is a real technical advantage over the known silver mirrors.

The thicknesses of the layers may be selected, in generally known manner (see for example the prior art referred to above), so that the reflections from the interfaces between the intermediate layer of relatively low refractive index and the inner and outer layers reinforce reflections from either the outer surface of the said outer layer (for front surface mirrors) or the inner surface of said inner layer (for back surface mirrors) . This will occur for front surface mirrors when the said intermediate and outer layers have an optical thickness of about n λ/4 and, for back surface mirrors, when said inner and intermediate layers each have an optical thickness of about n λ/4 wherein, in each case, λ is a wavelength of light in the visible region of the spectrum, i.e. from about 400 nm to 750 nm and n is an odd integer; n may be the same or different for each of the said layers, but is preferably 1 in each case.

It is preferable that, when either (or both) the inner layer or the outer layer is of relatively high refractive index material which is non-absorbing or only weakly absorbing in the visible region of the spectrum, both said inner and said outer layers have a thickness of about n λ/4, where n and λ are as defined above. In this way, reflections from, in the case of front surface mirrors, the interface between the inner layer of relatively high refractive index and the glass and, in the case of back surface mirrors, the face remote from the glass of the outer layer of relatively higher refractive index will reinforce the reflections from the interfaces between the coating layers increasing the overall visible light reflection of the mirrors. On the other hand when both said inner layer and said outer layer are of material which is highly absorbing in the visible region of the spectrum, the thickness of the layer remote from the light source (the reflecting layer) is less critical, since the amount of light passing back towards the light source after reflection at the side of that layer remote from the source will be much reduced by absorption.

To achieve the desired visible light reflection of 70% the thicknesses of the layers of optical thickness about n λ/4 may be selected so that the phase differences of the light of a wavelength of about 500 nm reflected towards the light source from the interfaces between the said coating layers and either (for front surface mirrors) the outer surface of the outer layer or (for back surface mirrors) the inner surface of the inner layer are all within ± 40% of a wavelength and preferably within ± 20% of a wavelength. The general condition is that all the primary reflected rays from the interfaces and either, for front surface mirrors said outer face or, for back surface mirrors said inner face, be substantially in phase with a phase error not exceeding those percentage values. Preferably, each of the reflection enhancing layers (being in the case of front surface mirrors each of the outer and intermediate layers and in the case of back surface mirrors the inner and intermediate layers) will have an optical thickness of 125 nm ± 25%; and, unless the reflecting layer is a metal, or neither inner nor outer layer is non-absorbing or only weakly absorbing in the visible, the reflecting layer will also have an optical thickness of 125nm ± 25%.

The closer the optical thicknesses of the layers are to n.500nm/4 the more neutral the reflection colour will be, while the closer the optical thicknesses of the layers are to n.550nm/4 the higher will be the total light reflection. However, it will readily, be appreciated, by those skilled in the art, that the reflection colour can be tuned by varying the optical thicknesses of the layers within the range from about one quarter of 400 nm (blue-green reflection) to one quarter of 750 nm (red-yellow reflection); it will also be appreciated that tuning away from about 550 nm will reduce the total visible light reflection of the product.

According to the preferred method of the invention, the layers of the required index are applied to a ribbon of hot glass during the glass production process. The depositions may be carried out in a known manner by liquid or powder spray processes, or by a chemical vapour deposition process, and each of the layers may be deposited by a different type of process. The depositions may be pyrolytic involving decomposition of a compound which is a pre-cursor for the material of the desired layer, possibly by reaction with another compound.

In general, it is convenient to use a chemical vapour deposition process to apply any silicon or silicon oxide (which may contain carbon) layers that may be required. Thus, for example, any silicon layer may be deposited (directly or indirectly) on the hot substrate by chemical vapour deposition from a silane gas, conveniently in a gaseous diluent, for example nitrogen. It is generally most convenient to use monosilane, although other silanes may also be used, such as dichlorosilane. One suitable process for deposition of such a silicon layer is described in GB 1507996. If desired, for example to improve the akali resistance of the silicon coating, the reactant gas may contain a proportion of a gaseous electron donating compound, especially an ethylenically unsaturated hydrocarbon compound, for example, ethylene, as additive.

A layer of silicon oxide containing carbon for use as a reflecting layer or a reflection enhancing layer of high refractive index but low absorption in the visible may similarly be deposited by chemical vapour deposition from a silane gas, conveniently in a gaseous diluent, in admixture with an ethylenically unsaturated hydrocarbon compound, for example ethylene, using a somewhat higher proportion of ethylene to silane than is required to produce a silicon layer. Again, the silane used is conveniently monosilane.

A silicon oxide layer for use as a reflection enhancing layer of low refractive index (i.e. an intermediate layer) may similarly be deposited by chemical vapour deposition from a silane gas, conveniently in a gaseous diluent, in admixture with oxygen or a source of oxygen. A mixture of a silane and an ethylenically unsaturated hydrocarbon, together with carbon dioxide or an alternative oxygen compound which serves as a source of oxygen such as a ketone, for example acetone, may be used. The relative concentrations of silane and the source of oxygen used will depend on the refractive index required; in general, the lower the refractive index required, the larger the proportion of oxygen-containing compound to silane to be used. Again, the silane used is preferably a monosilane.

For metal oxide layers, such as tin oxide or titanium oxide, either a liquid or powder spray process or a chemical vapour deposition will generally be used. Thus, for example, a layer of tin oxide or titanium oxide may be deposited by chemical vapour deposition by reaction of the corresponding gaseous metal chloride and water vapour, or by spraying a non-aqueous solution of the metal chloride onto the hot glass in the presence of water vapour. Thus tin oxide may be deposited by chemical vapour deposition of components selected from tin tetrachloride and water vapour, and an organo tin compound such as diethyl tin dichloride or tetramethyl tin, and oxygen, the oxygen optionally being present in air. The titanium oxide may be deposited by chemical vapour deposition of a titanium alkoxide, such as titanium isopropoxide, optionally in the presence of water or air.

When applying a coating layer to a ribbon of float glass, the chemical vapour deposition techniques can conveniently be carried out inside the float bath i.e. where the glass is supported on a molten metal bath under a protective atmosphere (but preferably after the glass has finished stretching i.e. at a glass temperature below 750°C), or after the ribbon has emerged from the float bath. When using a gas containing monosilane to deposit silicon, silicon oxide containing carbon, or other silicon oxide layers, it is preferred to carry out the deposition of that layer in the float bath where the glass is at a temperature in the range 600°C to 750°C in order to achieve a satisfactory rate of deposition.

When applying a coating layer to a ribbon of float glass by a liquid or powder spray process, it will generally be more convenient to deposit the layer after the ribbon of glass has emerged from the float bath.

The preferred layers - including silicon, silicon oxide, titanium oxide and (undoped) tin oxide used in the practice of the present invention - while reflecting in the visible region of the spectrum, are substantially transparent in the infra red region so that their presence (unlike that of layers of silver traditionally used for mirrors) on the surface of the glass during annealing will not have any substantial detrimental effect on the annealing of the coated glass. Thus, according to a preferred aspect of the present invention, the coating deposited is substantially transparent in the infra-red region of the spectrum. This means that such mirrors can readily be produced on-line in a float glass process because the mirrors can be annealed in known manner.

The process of the present invention is useful for the production of mirrors for a wide range of purposes, including domestic use as mirrors in bathrooms and bedrooms.

The materials, properties and thicknesses of the coating layers, and any additional outer protective layer more durable than and applied over said outer layer, may be selected as discussed above with reference to the method of the invention.

The skilled man will also appreciate that additional low and high refractive index quarter wave (n λ/4 where n is an odd integer, preferably 1) layers may be added to the stack of layers to further enhance the reflection.

It may also be possible to incorporate additional non-quarter wave layers between the said inner and outer layers, although in that event such layers are generally best regarded as forming part of a composite intermediate layer which should, considered as a composite single layer, have a thickness such that the phase differences of the light reflected towards the light source from the interfaces of said composite intermediate layer and the other coating layers and either (for a front surface mirror) the outer surface of the outer layer or (for a back surface mirror) the inner surface of the inner layer are all within ± 40% of a wavelength, and preferably within ± 20% of a wavelength. Thus the composite single layer will have a refractive index less than the refractive index of either said inner layer or said outer layer and less than 3; preferably such composite single layer will have a refractive index of less than 1.8 and an optical thickness of 125 nm ± 25%. Similarly, an additional layer may be included between the inner layer and the glass although, in the case of a back surface mirror, it will then normally be of refractive index intermediate between the refractive index of the inner layer and the glass.

The invention is illustrated but not limited by the following drawings. In the drawings:

Figure 1 is a section (not to scale) through a mirror in accordance with a first embodiment of the invention in use as a front surface mirror and having a back opacifying layer.

Figure 2 is a section (not to scale) through a mirror in accordance with a second embodiment of the invention in use as a back surface mirror and having a back opacifying layer.

Figure 3 is a diagrammatic representation of the arrangement of coating stations on a float glass production line for production of back surface mirrors in accordance with an embodiment of the method of the present invention.

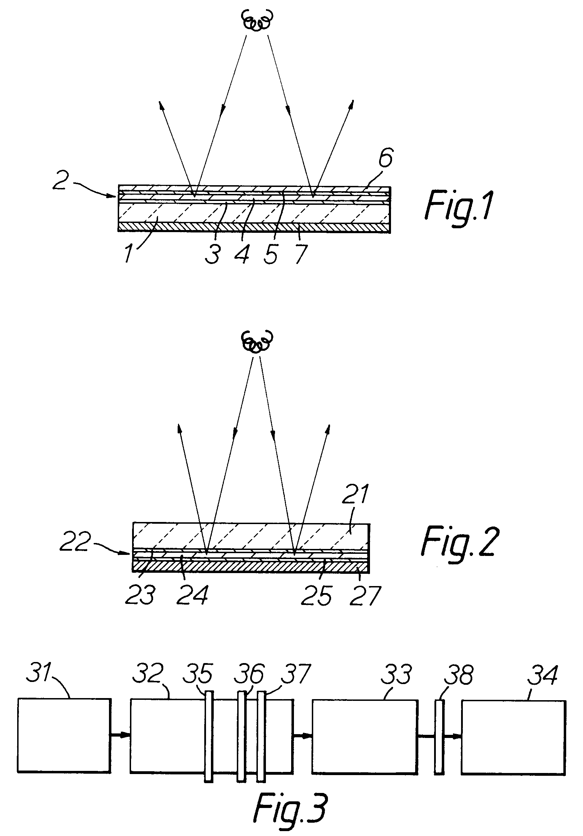

Referring to Figure 1, a front surface glass mirror comprises a float glass substrate 1 carrying a coating 2 comprising an inner layer 3 of relatively high refractive index, for example of pyrolytic silicon, and intermediate layer 4 of relatively low refractive index, for example of silicon oxide having a refractive index below 1.8 and containing silicon and oxygen in atomic proportions of about 1:2, and an outer layer 5 of relatively high refractive index, for example of pyrolytic silicon. If only one of the layers 3 and 5 of relatively high refractive index is of silicon, it will usually be the inner layer, with a material having a lower absorption for visible light, for example silicon oxide containing carbon, tin oxide or titanium oxide, being used as the outer layer 5. Each of the intermediate layer 4 and the outer layer 5 has an optical thickness of n λ/4, wherein n is an odd integer (preferably 1) and λ is a wavelength of light in the visible region of the spectrum i.e. from about 400 nm to 750 nm. If the inner and outer layers 3 and 5 are of an absorbing material such as silicon, the thickness of the inner layer is less critical, but it may also correspond to an optical thickness of n λ/4 wherein n and λ are as defined above and n is an odd integer preferably 1.

A protective layer 6 more durable than outer layer 5 is applied over layer 5. The protective layer may be of tin oxide, and may be applied by chemical vapour deposition. When the outer layer 5 is of silicon, such a protective layer of tin oxide should be applied only after a surface layer of silicon oxide has been formed on the silicon, for example, as described in US patent 4661381. An opacifying layer 7 comprised of an opaque layer of backing paint is applied to the back surface of the glass 1.

Referring to Figure 2, a back surface glass mirror comprises a float glass substrate 21 carrying a coating 22 comprising an inner layer 23 of relatively high refractive index, for example of pyrolytic silicon, an intermediate layer 24 of relatively low refractive index, for example of silicon oxide having a refractive index below 1.8 and containing silicon and oxygen in atomic proportions of about 1:2, and an outer layer 25 of relatively high refractive index, for example of pyrolytic silicon. If only one of the layers 23 and 25 of relatively high refractive index is of silicon, it will usually be the outer layer with a material having a lower absorption for visible light, for example silicon oxide containing carbon, or titanium oxide, being used as the inner layer 23. Each of the inner layer 23 and intermediate layer 24 has an optical thickness of n λ/4, wherein n is an odd integer (preferably 1) and λ is a wavelength of light in the visible region of the spectrum i.e. from about 400 nm to 750 nm. If the inner and outer layers 23 and 25 are of an absorbing material such as silicon, the thickness of the outer layer is less critical, but it may also correspond to an optical thickness of n λ/4 wherein n and λ are defined above and n is preferably 1.

The use of titanium oxide as one of the inner or outer layers instead of silicon has been found to increase the reflectivity of the mirror products. For example, for back surface mirrors, the use of titanium dioxide as the inner layer can increase the reflectivity, as compared to such mirrors having a silicon inner layer, by about 3 to 7%.

An opaque layer 27 of backing paint is applied over the coating 22 on glass substrate 21 as an opacifying layer.

In each of the embodiments of Figures 1 and 2, the opacifying layer may comprise a solvent or water-based paint. Suitable solvent-based paints have a base resin composition similar to those of paints of the type sold under the trade names TREBAX 600 (which is an air drying paint) and 2UL (which is a cross-linked paint), both paints being available from the company Kemira in the United Kingdom. The paint TREBAX 600 can be dried in air and the paint 2UL is a black unleaded stoving paint which may be cured at a temperature of 120°C for 2.5 minutes. The preferred solvent-based lead free paints differ from known backing paints for silvered mirrors (such as those sold as TREBAX 600 and 2UL) by not including any additives (such as lead) for preventing corrosion of an underlying metallic layer. The preferred paints have, as compared to the known mirror backing paints, a high amount of opacifier, such as carbon black e.g. at least around 1.4 wt% carbon black at a typical solids content of the paint of around 62%. This is to provide sufficient opacification at dry film thicknesses of around 25 microns or less. The solvent-based paint layer is preferably around 18 to 25 microns thick (when cured) in order to achieve sufficient opacification and be readily curtain coated although thicker layers may be employed. The paint layer has been applied as a single layer, preferably by a curtain coating process although roller or spray coating may alternatively be employed. The paint viscosity is controlled so as to be suitable for the selected paint application process. The non-cross-linked solvent-based paints are suitable for both Face 1 and Face 2 applications. The cross-linked solvent-based paint is more durable than the non-cross-linked paint but suitable only for use on Face 2 because shrinkage during cross-linking tends to stress the adhesive bond between the coating and underlying surface; when the paint is applied to the reflecting coating as opposed to the float glass substrate the adhesion between the coating and the underlying surface is sufficiently strong for reliable Face 2 application to give acceptable durability life times of the mirrors. Mirror samples in accordance with the embodiment of Figure 2 having a cross-linked solvent-based paint as the back opacifying layer have passed more than three times the standards of the tests DIN 50017 and DIN 50021 for humidity and salt spray durability respectively.

For enhancing the adhesion between the solvent-based paints and the glass surface for Face 1 mirrors or the reflecting coating for the Face 2 mirrors, a primer is applied to the underlying surface before application of the paint or alternatively the primer is incorporated into the paint composition. When the primer is incorporated into a cross-linked solvent-based paint, the paint can be applied to Face 1 and Face 2 mirrors. A preferred primer is an amino silane having methoxy functionality. A suitable primer is a 1-2% solution of aminopropyltrimethoxysilane in deionised water, such a silane being commercially available from Union Carbide, USA under the trade name A1110. Preferably, from 1 to 6% by weight, most preferably around 1% for a back surface mirror and around 5% for a front surface mirror (based on the weight of the paint at a typical dry solids content of around 62%) silane primer is incorporated into the paint composition. An epoxy silane as opposed to an amino silane may alternatively be employed as a primer layer.

Instead of solvent-based paints, water-based paints may be employed. The water-based paints provide the advantages that the absence of solvent is environmentally more acceptable than with solvent-based paints and no solvent abatement equipment is required. Suitable water-based paints are water-borne alkyds or acrylic emulsions. We have found that using such water-borne alkyds there is no need for a primer layer between the paint and the underlying surface. The water-based alkyd paints are typically cured at 120°C for up to 10 minutes, preferably around 2.5 minutes. The coatings are typically applied at a wet thickness of 50 microns, drying to a thickness of around 25 microns.

Particularly preferred paint compositions for Face 1 or Face 2 applications are based on short oil length alkyd resin, preferably modified with an amino resin, preferably a melamine-formaldehyde resin, which is lead-and heavy metal-free (i.e. it does not contain corrosion inhibitors) and contains silane. Typically the paint has the compositional ranges shown in Table 1.

The paint composition additionally incorporates around 5 wt% of aminopropyltrimethoxysilane, available under the trade name A1110 identified above.

Such a paint composition can be cured by cross-linking, the curing being at an elevated temperature of at least 120°C for a period of up to 10 minutes, preferably around 2.5 minutes. This paint composition provides the advantage over known compositions of being readily curable quickly and at low curing temperatures, this being required for cost-effective and commercially acceptable mirror manufacture.

Figure 3 illustrates diagrammatically, a float glass production line comprising a glass melting section 31, a float bath section 32 for forming the molten glass into a continuous ribbon, a lehr section 33 for annealing the said glass ribbon and a warehouse section 34 for cutting pieces of glass from the ribbon for storage and/or distribution and use. For the production of mirrors in accordance with the method of the invention, each of the three coating stations for respectively applying the inner, intermediate and outer layers will normally be located in or between the float bath section 32 and lehr section 33; in the illustrated embodiment of the inventions, the said three coating stations 35,36,37 are arranged in the float bath section 32 as shown in Figure 7. However, in alternative embodiments, one or each of the coating stations for applying inner, intermediate and outer layers in accordance with the invention may be located between the float bath section 32 and the lehr section 33. The location of each coating station is selected to be at a position where the glass ribbon has substantially reached its final thickness (usually at a glass temperature of around 750°C) so that it is not subject to further stretching which might crack any coating applied, but where its temperature remains sufficiently high for formation of a further pyrolytic layer (usually a glass temperature of at least 300°C).

In this embodiment, a paint applying station 38 is disposed between the lehr section 33 and the warehouse section 34, although the paint applying station 38 may alternately be disposed in the lehr section 33. The paint applying station 38 incorporates a paint spray or roller system for applying a uniformly thick coating of paint across the width of the glass ribbon, which is typically more than 3 metres. In this embodiment, the paint is applied on-line but in accordance with other embodiments of the present invention, the paint is applied off-line after the pieces of glass have been formed in the warehouse section. The paint may be applied off-line by a curtain coater or a roller system, or by spraying.

The present invention is further illustrated with reference to the following non-limiting Example.

### Example

An alkyd-based paint, modified with a melamine resin, having a composition falling within the ranges specified in Table 1, and having a viscosity of from 5 to 7 poise was put into the paint reservoir of a curtain coating apparatus having a width of 3.21 metres. The alkyd resin and melamine resin components of the composition were present in amounts of from about 16 to 26 wt% and from about 2.5 to 3.5 wt% respectively at respective solids contents in the paint of from about 40 to 80 wt%. A solution of aminopropyltrimethoxysilane, being the A1110 silane product available from Union Carbide as identified above, was added to the paint composition in an amount of 5% by weight, based on the weight of the paint at a typical solids content of around 62%. The silane- containing paint composition in the reservoir was thinned to a desired viscosity by the addition of a thinner available in commerce under the trade name Evasol A from the company Ellis & Everard UK Limited, Bradford, U.K. so that the thinned paint composition had a viscosity of 90 seconds when measured on a B4 cup. The paint was then pumped into the head of the curtain coater and a curtain formed.

In order to set up the curtain coater so that the desired thickness of the paint when dried was present on the resultant opacified mirrors, a calibration procedure was carried out wherein a 4 mm thick glass panel having dimensions of approximately 300 mm x 300 mm was passed through the paint curtain at a speed of 80 metres/minute. The painted glass panel was then heated at a temperature of 120°C for 2.5 minutes, the temperature being the glass face temperature, in order to cure the paint and the panel was then allowed to cool. The dry film thickness of the paint was then measured using a paint inspection gauge. The nip of the curtain coater, which controlled the width of the curtain, was adjusted in order to achieve a dry film paint thickness on subsequently treated mirror substrates of 25 microns. The curtain coater incorporated an autoviscometer which maintained the viscosity of the paint at 90 seconds on a B4 cup.

In order to manufacture opacified mirrors in accordance with the invention, a pair of mirrors, each comprising a glass substrate carrying a low transmissivity reflecting coating, having dimensions of approximately 2 metres x 1 metre, were curtain coated by being passed through the curtain coater at the speed specified above so as to achieve a 25 micron dry film thickness. One mirror was coated with paint on the glass side and the other mirror was coated with paint on the side of the substrate carrying the reflecting coating. Thus two opacified mirrors were produced, one being a Face 1 mirror and the other being a Face 2 mirror. The painted mirrors were subjected to the curing regime specified above and then cooled. The two mirror samples were left to age for a period of 3 days prior to durability testing. Samples were then cut to form smaller sheets having dimensions 100 mm x 100 mm, each sheet having a cut edge on all four sides.

The mirror samples were then subjected to a number of durability tests as outlined below.

### DIN 50017

The opacified mirrors were subjected to the humidity tests specified in DIN 50017 by being held at a temperature of 40°C at a humidity of 95% relative humidity. After a test period of 960 hours, no sample had failed the test and in particular there was no loss of adhesion of the paint from either the glass surface for Face 1 mirrors or the reflecting coating for Face 2 mirrors.

### DIN 50021

In this corrosion test, the mirror substrates were subjected to wetting by a neutral 5% salt spray in the SS salt spray test specified in DIN 50021. No failure of the test specified in DIN 50021 occured after a test period of 960 hours.

Furthermore, the samples were also subjected to the CASS salt spray test as as specified in DIN 50021. Again, there was no failure of this test by any samples after a test period of 600 hours.

The tests under DIN 50017 and 50021 are standard durability tests for silver mirrors, the standard duration period being 480 hours for the DIN 50017 test and the SS salt spray test under DIN 50021 and 120 hours for the CASS test under DIN 50021.

### Water Immersion

The samples were also subjected to complete immersion in water at a temperature of 50°C for a period of 240 hours. After the test period, no loss of adhesion of the paint was observed and the samples achieved a 4B cross hatch test, to ASTM-D3359 specification.

### Cycled Humidity Test

The sheets were subjected to four cycles in a 24 hour period of humidity cycling at temperatures varying from 35°C to 75°C at a humidity of 95% relative humidity. After a test period of 300 cycles, no loss of adhesion of the paint was observed. This test is commonly employed for testing painted glass sheets to assess external weathering performance.

The process and product of the present invention have numerous advantages over the prior art. The use of chemically stable reflecting layers for the manufacture of mirrors as compared to the use of potentially corrodable metallic layers in the prior art enables single layer paint coatings to be applied to the mirrors either off-line or on-line for the manufacture of front or back surface mirrors. The surface is environmentally friendly because the paints do not require to provide corrosion protection to the reflecting coating and accordingly paints do not need to include corrosion inhibitors, such as lead, which are required in known mirror backing paints. The solvent-based paints utilised in the present invention are curtain coatable which is an efficient and inexpensive manufacturing process. The paint coatings of the present invention are required simply to provide opacification of the mirror structure in view of the low transmissivity of the reflecting coating. The opacity can be controlled by the use of opacifiers in the paint composition.

The resultant coated mirrors made in accordance with the present invention, because they incorporate non-metallic reflecting mirrors and can be made on-line, can have a lower cost than a silvered mirror but can have a longer warranted life time for various architectural applications.

The preferred mirrors can be processed in the same manner as known silvered mirrors, such as by cutting, drilling, bevelling etc..

**TABLE 1**

| | % w/w Range |
|---|---|
| Short oil length, tall/tung oil phenolic modified Alkyd resin 60% NV in Xylene | 27-42 |
| | Preferably 33-42 |
| Melamine resin 80% in isobutanol | 3.5-4.1 |
| Zinc Oxide | 0.5-4.0 |
| Talc | 10-20 |
| Barytes | 10-20 |
| Carbon Black | 0.5-6.0 |
| n Butanol | 4-12 |
| Modified hydrogenated castor oil, 60% in xylene | 0.5-1.5 |
| 10% Calcium drier | 0.2-0.5 |
| Cobalt -Zirconium drier | 0.05-0.4 |
| Methyl Ethyl Ketoxine | 0.1-0.4 |
| Xylene | 7-10 |

The solids content ranges from around 40 to around 80% of the weight of the paint. A typical solids content is around 62 wt%.

## Claims

1. A mirror comprising a glass substrate, a low transmissivity reflecting coating on the substrate and an opacifying layer which is disposed on the glass substrate for a front surface mirror or on the reflecting coating for a back surface mirror, the opacifying layer comprising an alkyd resin based paint having an organo silane primer incorporated therein.

2. A mirror according to claim 1 wherein the opacifying layer comprises a single layer.

3. A mirror according to claim 1 or claim 2 wherein the opacifying layer is up to about 25 microns thick.

4. A mirror according to claim 3 wherein the opacifying layer is around 18 microns thick.

5. A mirror according to any foregoing claim wherein the paint is substantially lead-free.

6. A mirror according to any foregoing claim wherein the primer comprises aminopropyltrimethoxysilane.

7. A mirror according to any foregoing claim wherein the primer is incorporated into the paint prior to drying in an amount of from 1 to 6 wt% based on the weight of the paint.

8. A mirror according to claim 7 wherein the mirror is a front surface mirror and the primer is incorporated into the paint prior to drying in an amount of around 5 wt% based on the weight of the paint.

9. A mirror according to claim 7 wherein the mirror is a back surface mirror and the primer is incorporated into the paint prior to drying in an amount of around 1 wt% based on the weight of the paint.

10. A mirror according to any foregoing claim wherein the paint further comprises an amino resin.

11. A mirror according to claim 10 wherein the amino resin is melamine resin.

12. A mirror according to any foregoing claim wherein the paint further comprises carbon black as an opacifier in an amount of at least around 1.4% based on the weight of the paint prior to drying.

13. A mirror according to any foregoing claim wherein the reflecting coating comprises a reflecting layer and at least two reflection enhancing layers whereby the mirror has a visible light reflection of at least 70%.

14. A mirror according to claim 13 wherein the reflecting coating comprises an inner layer nearest the glass substrate, an intermediate layer and an outer layer, and the intermediate layer comprises silicon dioxide.

15. A mirror according to claim 13 or claim 14 wherein the reflecting coating comprises an inner layer nearest the glass substrate, an intermediate layer and an outer layer, and at least one of the inner and outer layers is of silicon.

16. A mirror according to claim 15 wherein both of the inner and outer layers are of silicon.

17. A mirror according to claim 15 wherein one of the inner and outer layers is of tantalum oxide, titanium oxide, tin oxide or silicon oxide.

18. A mirror according to any foregoing claim wherein the reflecting coating has a transmissivity of from 1 to 15% in visible light.

19. A mirror according to claim 18 wherein the reflecting coating has a transmissivity of from 3 to 10% in visible light.

20. A method of producing mirrors comprising depositing onto a hot ribbon of glass during the production process a low transmissivity reflecting coating and applying an opacifying layer to the glass substrate or the reflecting coating of the mirrors so formed, the opacifying layer comprising an alkyd resin based paint having an organosilane primer incorporated therein.

21. A method according to claim 20 wherein the opacifying layer comprises a single opacifying layer.

22. A method according to claim 20 or claim 21 wherein the opacifying paint layer is up to about 25 microns thick when dried.

23. A method according to any one of claims 20 to 22 wherein the paint layer is around 18 microns thick.

24. A method according to any one of claims 20 to 23 wherein the paint is substantially lead-free.

25. A method according to any one of claims 20 to 24 wherein the primer comprises aminopropyltrimethoxysilane.

26. A method according to any one of claims 20 to 25 wherein the primer is incorporated into the paint prior to drying in an amount of from 1 to 6 wt% based on the weight of the paint.

27. A method according to claim 26 wherein the mirror is a front surface mirror and the primer is incorporated into the paint prior to drying in an amount of around 5 wt% based on the weight of the paint.

28. A method according to claim 26 wherein the mirror is a back surface mirror and the primer is incorporated into the paint prior to drying in an amount of around 1 wt% based on the weight of the paint.

29. A method according to any one of claims 20 to 28 wherein the paint further comprises an amino resin.

30. A method according to claim 29 wherein the amino resin is melamine resin.

31. A method according to any one of claims 20 to 30 wherein the paint further comprises carbon black as an opacifier in an amount of at least about 1.4% based on the weight of the paint.

32. A method according to any one of claims 20 to 31 wherein the reflecting coating comprises a reflecting layer and at least two reflection enhancing layers whereby the mirror has a visible light reflection of at least 70%.

33. A method according to claim 32 wherein the reflecting coating comprises an inner layer nearest the glass substrate, an intermediate layer and an outer layer, and the intermediate layer comprises silicon dioxide.

34. A method according to claim 32 or claim 33 wherein the reflecting coating comprises an inner layer nearest the glass substrate, an intermediate layer and an outer layer, and at least one of the inner and outer layers is of silicon.

35. A method according to claim 34 wherein both of the inner and outer layers are of silicon.

36. A method according to claim 34 wherein one of the inner and outer layers is of tantalum oxide, titanium oxide, tin oxide or silicon oxide.

37. A method according to any one of claims 20 to 36 wherein the reflecting coating has a transmissivity of from 1 to 15% in visible light.

38. A method according to claim 37 wherein the reflecting coating has a transmissivity of from 3 to 10% in visible light.

39. A method according to any one of claims 20 to 38 wherein the paint is applied by a curtain coating, spray coating or roller coating process.

40. A paint composition for use as a mirror backing paint, the paint composition having a resin component consisting of an alkyd resin as the base resin of the composition, optionally in admixture with a melamine resin, at least one opacifier and an organo silane adhesion promotor in an amount of at least around 1% by weight based on the weight of the paint and the paint being substantially lead-free.

41. A paint composition according to claim 40 wherein the organo silane is aminopropyltrimethoxysilane.

42. A paint composition according to claim 40 or 41 wherein the organo silane is in an amount of from 1 to 6 wt% based on the weight of the paint.

43. A paint composition according to any one of claims 40 to 42 which is fast curing, being curable at a temperature of 120°C for a period of up to 10 minutes, preferably around 2.5 minutes.

44. A paint composition according to any one of claims 40 to 43 wherein the alkyd resin is present in an amount of from 16 to 26 wt% based on the weight of the paint.

45. A paint composition according to claim 44 wherein the melamine resin is present in an amount of from 2.5 to 3.5 wt% based on the weight of the paint.

46. A paint composition according to any one of claims 40 to 45 wherein the opacifier is carbon black.

47. A paint composition according to claim 46 wherein the carbon black is present in an amount of at least 1.4% by weight based on the weight of the paint.

48. A mirror comprising a glass substrate, a low transmissivity reflecting coating on the substrate and an opacifying layer which is disposed on the glass substrate for a front surface mirror or on the reflecting coating for a back surface mirror, the opacifying layer comprising a lead-free alkyd resin based paint.

49. A mirror according to claim 48 wherein the opacifying layer comprises a single layer.

50. A mirror according to claim 48 or claim 49 wherein the opacifying layer is up to about 25 microns thick.

51. A mirror according to claim 50 wherein the opacifying layer is around 18 microns thick.

52. A mirror according to any one of claims 48 to 51 wherein an organo silane is incorporated into the paint or has been applied to the underlying surface as a primer before application of the paint thereover.

53. A mirror according to claim 52 wherein the organo silane comprises aminopropyltrimethoxysilane.

54. A mirror according to claim 52 or claim 53 wherein the organo silane is incorporated into the paint prior to drying in an amount of from 1 to 6 wt% based on the weight of the paint.

55. A mirror according to claim 54 wherein the mirror is a front surface mirror and the primer is incorporated into the paint prior to drying in an amount of around 5 wt% based on the weight of the paint.

56. A mirror according to claim 54 wherein the mirror is a back surface mirror and the primer is incorporated into the paint prior to drying in an amount of around 1 wt% based on the weight of the paint.

57. A mirror according to any one of claims 48 to 56 wherein the paint further comprises an amino resin.

58. A mirror according to claim 57 wherein the amino resin is melamine resin.

59. A mirror according to any one of claims 48 to 58 wherein the paint further comprises carbon black as an opacifier in an amount of at least around 1.4% based on the weight of the paint prior to drying.

60. A mirror according to any one of claims 48 to 59 wherein the mirror has a visible light reflection of at least 70%.

61. A mirror according to claim 60 wherein the reflecting coating comprises a reflecting layer and at least two reflection enhancing layers.

62. A mirror according to claim 61 wherein the reflecting coating comprises an inner layer nearest the glass substrate, an intermediate layer and an outer layer, and the intermediate layer comprises silicon dioxide.

63. A mirror according to claim 61 or claim 62 wherein the reflecting coating comprises an inner layer nearest the glass substrate, an intermediate layer and an outer layer, and at least one of the inner and outer layers is of silicon.

64. A mirror according to claim 63 wherein both of the inner and outer layers are of silicon.

65. A mirror according to claim 63 wherein one of the inner and outer layers is of tantalum oxide, titanium oxide, tin oxide or silicon oxide.

66. A mirror according to any one of claims 48 to 65 wherein the reflecting coating has a transmissivity of from 1 to 15% in visible light.

67. A mirror according to claim 66 wherein the reflecting coating has a transmissivity of from 3 to 10% in visible light.

68. A method of producing mirrors comprising depositing onto a hot ribbon of glass during the production process a low transmissivity reflecting coating whereby the mirrors have a visible light reflection of at least 70% and applying an opacifying paint layer to the glass substrate or the reflecting coating of the mirrors so formed by a coating process selected from curtain coating, roller coating or spray coating.

69. A method according to claim 68 wherein the opacifying layer is applied on-line with the glass production process by roller or spray coating.

70. A method according to claim 68 wherein the opacifying layer is applied off-line from the glass production process by curtain or roller coating.

71. A method according to any one of claims 68 to 70 wherein the opacifying layer comprises a single opacifying layer.

72. A method according to any one of claims 68 to 71 wherein the opacifying paint layer is up to about 25 microns thick when dried.

73. A method according to claim 72 wherein the opacifying paint layer is around 18 microns thick when dried.

74. A method according to any one of claims 68 to 73 wherein the paint comprises an alkyd resin based paint.

75. A method according to any one of claims 68 to 74 wherein the paint is substantially lead-free.

76. A method assembly according to any one of claims 68 to 75 wherein an organo silane is incorporated into the paint or has been applied to the underlying surface as a primer before application of the paint thereover.

77. A method according to claim 76 wherein the primer comprises aminopropyltrimethoxysilane.

78. A method according to claim 76 or claim 77 wherein the organo silane is incorporated into the paint prior to drying in an amount of around 5 wt% based on the weight of the paint.

79. A method according to claim 78 wherein the mirror is a front surface mirror and the primer is incorporated into the paint prior to drying in an amount of around 5 wt% based on the weight of the paint.

80. A method according to claim 78 wherein the mirror is a back surface mirror and the primer is incorporated into the paint prior to drying in an amount of around 1 wt% based on the weight of the paint.

81. A method according to any one of claims 68 to 80 wherein the paint further comprises an amino resin.

82. A method according to claim 81 wherein the amino resin is melamine resin.

83. A method according to any one of claims 68 to 82 wherein the paint further comprises carbon black as an opacifier in an amount of about 1.4% based on the weight of the dried paint.

84. A method according to any one of claims 68 to 83 wherein the reflecting coating comprises a reflecting layer and at least two reflection enhancing layers.

85. A method according to claim 84 wherein the reflecting coating comprises an inner layer nearest the glass substrate, an intermediate layer and an outer layer, and the intermediate layer comprises silicon dioxide.

86. A method according to claim 84 or claim 85 wherein the reflecting coating comprises an inner layer nearest the glass substrate, an intermediate layer and an outer layer, and at least one of the inner and outer layers is of silicon.

87. A method according to claim 86 wherein both of the inner and outer layers are of silicon.

88. A method according to claim 86 wherein one of the inner and outer layers is of tantalum oxide, titanium oxide, tin oxide or silicon oxide.

89. A method according to any one of claims 68 to 88 wherein the reflecting coating has a transmissivity of from 1 to 15% in visible light.

90. A method according to claim 89 wherein the reflecting coating has a transmissivity of from 3 to 10% in visible light.

91. A method of opacifying a low transmissivity mirror comprising a glass substrate and a low transmissivity reflecting coating on the substrate, the method comprising applying to the glass substrate for a front surface mirror or to the reflecting coating for a back surface mirror a paint composition having a resin component consisting of an alkyd resin as the base resin of the composition, optionally in admixture with a melamine resin, at least one opacifier and an organo silane adhesion promotor in an amount of at least 1% by weight based on the weight of the paint and the paint being substantially lead-free.

92. Use of a paint composition as claimed in any one of claims 40 to 47 as an opacifying layer on a mirror comprising a glass substrate carrying a low tranmissivity reflecting coating.
